# FASCICULE DE BREVET EUROPEEN

(11) **EP 2 572 126 B1**
(45) Date de publication et mention de la délivrance du brevet: **26.03.2014**
(21) Numéro de dépôt: 11721484.1
(22) Date de dépôt: 16.05.2011
(51) Int. Cl.: F16K 1/30

(54) **ROBINET BOUTEILLE AVEC CLAPET DE PRESSION RESIDUELLE**
ZYLINDERVENTIL MIT RESTDRUCKVENTIL
CYLINDER VALVE HAVING A RESIDUAL PRESSURE VALVE

(30) Priorité: 20.05.2010 LU 91690
(43) Date de publication de la demande: 27.03.2013
(73) Titulaire: Luxembourg Patent Company S.A., 7440 Lintgen (LU)
(72) Inventeur: KREMER, Paul, L-7263 Helmsange (LU)
(74) Mandataire: Lecomte & Partners
(86) Numéro de dépôt international: PCT/EP2011/057893
(87) Numéro de publication internationale: WO 2011/144573

(56) Documents cités:
- FR-A1- 2 878 313
- US-A- 5 067 520
- US-A- 5 465 754

## Description

### Domaine technique

L'invention a trait à un robinet pour gaz sous pression, utilisé habituellement sur des bouteilles. Le robinet dont il est question comprend un dispositif apte à maintenir une pression résiduelle dans la bouteille et ce, afin d'éviter une mise à l'air libre de la bouteille lorsque cette dernière est vidée et que le robinet est ouvert. Le dispositif apte à maintenir une pression résiduelle est formé par un clapet étanche apte à s'ouvrir en présence d'une différence de pression entre la bouteille et la sortie supérieure à une valeur prédéterminée.

### Technique antérieure

Le document de brevet US 5067520 divulgue un robinet bouteille à commande manuelle et avec clapet de pression résiduelle. La fonction vanne de fermeture du robinet est assurée par un obturateur mobile en translation selon l'axe longitudinal du robinet et coopérant avec un siège du corps de robinet. Le déplacement de l'obturateur est assuré par une tige de commande solidaire avec ledit obturateur. Elle est animée d'un mouvement combiné de rotation et de translation lorsque le volant de commande est manipulé. Le clapet de pression résiduelle est disposé en aval de la vanne de fermeture, plus précisément entre l'obturateur de la vanne de fermeture et l'orifice de sortie du gaz. Le clapet est monté coulissant sur la tige de commande et coopère avec un siège formé sur l'obturateur de la vanne de fermeture, plus précisément avec un siège formé sur une face de l'obturateur opposée à celle coopérant avec le siège de la vanne de fermeture. Un ressort est disposé dans le corps du robinet afin de presser le clapet contre l'obturateur. Une butée amovible est prévue au niveau du volant de commande, ayant pour fonction de limiter la course de déplacement de la tige de commande.

Le fonctionnement de ce robinet est le suivant. Lors du service, le robinet est ouvert par rotation du volant de commande jusqu'à ce que la butée amovible du volant vienne en contact avec le corps du robinet. Le mouvement de rotation du volant va imprimer un mouvement combiné de rotation et de translation vers le haut de la tige de commande. L'obturateur va ainsi monter progressivement et ouvrir la vanne de fermeture. La pression présente au niveau de l'entrée (typiquement celle d'une bouteille sur laquelle le robinet est vissé) va déplacer le clapet vers le haut contre l'effort du ressort et permettre le débit de gaz en service. Le gaz contenu dans la bouteille pourra être consommé jusqu'à ce que la pression dans la bouteille atteigne la valeur de pression résiduelle du clapet. A partir de ce moment, le gaz ne pourra plus sortir. Pour le remplissage de la bouteille, la butée amovible est enlevée et le volant est manipulé jusqu'à ouvrir en grand la vanne de fermeture. L'ensemble obturateur et clapet vont être déplacés vers le haut du robinet jusqu'à ce que qu'un épaulement du clapet soit aligné avec la partie supérieure de l'alésage transversal du raccord de sortie. Une pige liée au raccord de remplissage pourra alors coopérer avec cet épaulement et le volant de commande sera manipulé dans le sens de la descente de l'obturateur afin de « décoller » le clapet de son siège sur l'obturateur et de permettre le remplissage de la bouteille par un débit à contre sens. Ce dispositif présente l'avantage d'être de construction simple et fiable mais l'inconvénient également de requérir une pige de blocage du clapet au niveau du raccord de remplissage. Il requiert de plus une manipulation complexe.

Le document de brevet EP 0708281 A divulgue un robinet bouteille avec une fonction de maintien de pression résiduelle. Il comprend, similairement à l'enseignement du document précédent, une vanne de fermeture avec un obturateur monté sur une tige de commande et coopérant avec un siège formé dans le corps du robinet. La tige de commande présente toutefois ici la particularité que l'obturateur est monté coulissant selon l'axe longitudinal sur la tige de commande et, ce sous l'effort d'un ressort. En position de fermeture du robinet, la tige de commande est en buté contre l'obturateur, ce dernier étant alors pressé sur le siège. En position de service, le volant de commande est manipulé en rotation jusqu'à une butée. La tige de commande est montée et l'obturateur est maintenu en contact sur le siège par l'effort du ressort. Le gaz pourra s'écouler tant que la différence de pression entre la bouteille et la sortie sera supérieure à la valeur de pression résiduelle. Pour le remplissage, un dispositif de butée amovible pour la tige de commande est libéré afin de permettre un mouvement de montée supplémentaire de la tige de commande. L'obturateur étant monté coulissant avec butée sur la tige, celui-ci va alors quitter le siège lorsque la tige et l'obturateur arriveront en butée au niveau de leur montage coulissant, permettant ainsi le remplissage de la bouteille par un débit de gaz en sens inverse. Ce dispositif évite la présence d'une pige spécifique sur le raccord de remplissage. Il présente cependant deux inconvénients, à savoir la complexité du montage coulissant de l'obturateur sur la tige et les problèmes de fiabilité associés, ainsi que les risques de non vidage complet de la bouteille lorsque le robinet n'est pas ouvert jusqu'à contact avec la butée amovible.

Le document de brevet US 5465754 divulgue une cartouche assurant la double fonction de vanne de fermeture et de clapet de pression résiduelle, ladite cartouche étant destinée à être vissée dans un corps lui-même destiné à être vissé sur une bouteille de gaz. La fonction vanne de fermeture est assurée par un dispositif à siège inversé comprenant un siège et un obturateur mobile en translation selon l'axe longitudinal de la cartouche et disposé en amont dudit siège. L'obturateur est actionnable par une tige de commande traversant le siège est accessible en aval. La fonction clapet de pression résiduelle est assurée par un dispositif comprenant un obturateur mobile logé coulissant dans un logement et coopérant avec un siège déformable dudit logement. L'obturateur est maintenu en contact avec le siège classiquement par un ressort. Ce dispositif est disposé en amont de la vanne de fermeture, c'est-à-dire qu'il est dans la haute pression régnant dans la bouteille. Lorsque la différence de pression entre l'entrée et la sortie de ce dispositif dépasse la valeur de pression résiduelle prédéfinie, le clapet s'ouvre et autorise le débit de gaz depuis la bouteille vers la sortie. Pour le remplissage de la bouteille une fois celle-ci vide, il est prévu d'éloigner l'obturateur de la vanne de fermeture d'avantage de son siège par des moyens de commande. Ce déplacement supplémentaire va mettre en contact une excroissance de la tige de commande dirigée vers l'amont avec le logement du clapet de pression résiduelle. Ce logement forme lui-même un clapet anti-retour inversé avec une cavité de la cartouche. Cette mise en contact va permettre le déplacement du logement et, partant, l'ouverture du clapet, la vidange totale de la bouteille et son remplissage par un débit en sens inverse du débit de service. Ce dispositif est très intéressant du point de vue fonctionnalité mais présente cependant une construction assez complexe et coûteuse tant du point de vue usinage que du point de vue montage. Il manque également de compacité.

### Résumé de l'invention

L'invention a pour objet de proposer un robinet pour gaz sous pression palliant au moins un des inconvénients sus mentionnés. Plus spécifiquement, l'invention a pour objet de proposer un robinet bouteille, avec une fonction de maintien de pression résiduelle, le robinet ne nécessitant pas d'excroissance particulière au niveau du raccord de remplissage en vue du remplissage de la bouteille, et le robinet étant de construction simple, fiable et peu coûteuse.

L'invention consiste en un robinet pour gaz sous pression, comprenant:

un corps avec une entrée de gaz, une sortie de gaz et un passage reliant ladite entrée à ladite sortie; un premier obturateur mobile en translation selon une direction correspondant essentiellement à un axe longitudinal du robinet, ledit obturateur étant apte à coopérer de manière étanche avec un premier siège de manière à fermer ledit passage; une tige de commande dudit obturateur disposée selon une direction correspondant essentiellement audit axe longitudinal; un deuxième obturateur mobile en translation selon une direction correspondant essentiellement audit axe longitudinal, coopérant de manière étanche avec un deuxième siège sous l'effet de moyens élastiques de manière à fermer ledit passage lorsque la différence de pression entre ladite entrée et ladite sortie est inférieure à un seuil prédéterminé, remarquable en ce que le premier siège est mobile en translation avec le deuxième siège selon une direction correspondant essentiellement audit axe longitudinal et de manière étanche par rapport audit passage; et ladite tige de commande est conçue pour, dans un déplacement selon une direction, coopérer avec lesdits premier et deuxième sièges en vue de leur déplacement après avoir ouvert ledit passage entre le premier obturateur et le premier siège, de manière à ouvrir le passage entre le deuxième obturateur et le deuxième siège.

Cette construction présente l'avantage de pouvoir ouvrir le clapet de pression résiduelle (qui est formé par le deuxième obturateur et le deuxième siège) par un déplacement supplémentaire de la tige de commande. Il en résulte une facilité de manipulation puisqu'il n'est pas nécessaire de faire intervenir un raccord de remplissage spécifique pour bloquer le clapet de pression résiduelle en position ouverte et, de plus, une simplicité de construction.

Selon un mode avantageux de l'invention, la tige de commande comprend une première butée destinée à coopérer avec les premier et deuxième sièges, ladite butée étant préférentiellement sous forme de collerette. Différents mode de réalisation de la tige de commande sont possibles. Cette construction avec une butée formée par une collerette est particulièrement simple, peu coûteuse et compacte.

Selon un autre mode avantageux de l'invention, le deuxième obturateur et le deuxième siège sont disposés entre le premier obturateur et la sortie de gaz. Il s'agit d'une configuration particulièrement compacte.

Selon un encore autre mode avantageux de l'invention, le premier obturateur est disposé en amont du premier siège. Il s'agit en fait d'un siège dit inversé, à savoir que dans un état fermé du premier obturateur avec le premier siège, la pression amont (par exemple dans la bouteille) a pour effet de presser l'obturateur contre le siège dans le sens de fermeture. L'ouverture d'un tel dispositif peut être opérée par un simple effort de compression en sens inverse sur l'obturateur. Il en résulte une simplicité de construction de la tige de commande.

Selon un encore autre mode avantageux de l'invention, la tige comprend une deuxième butée destinée à coopérer avec le premier obturateur, ladite deuxième butée étant préférentiellement formée par l'extrémité de ladite tige.

Alternativement, le premier obturateur pourrait être disposé en aval du premier siège et, le deuxième obturateur et le deuxième siège pourraient être disposés entre le premier obturateur et l'entrée de gaz. Dans ce cas, la tige de commande traverserait le premier obturateur et le premier siège en vue de coopérer avec le deuxième obturateur située en amont du premier siège.

Selon un encore autre mode avantageux de l'invention, la tige de commande se déplace essentiellement, préférentiellement exclusivement, en translation. Il n'est en effet pas nécessaire voir pas désirable que la tige tourne.

Selon un encore autre mode avantageux de l'invention, le deuxième obturateur est conçu de sorte à ce que son étanchéité avec le deuxième siège entoure la tige de commande.

Selon un encore autre mode avantageux de l'invention, le deuxième obturateur comprend une jupe généralement cylindrique supportant sur sa tranche une surface d'étanchéité préférentiellement déformable, destinée à coopérer avec le deuxième siège. Cette construction permet de prévoir un support des premier et deuxième sièges exclusivement métallique, et, partant, plus simple et moins coûteux à réaliser. La zone déformable et le siège rigide pourraient cependant être inversés, à savoir que la zone déformable pourrait être sur le siège.

Selon un encore autre mode avantageux de l'invention, le deuxième obturateur a une forme généralement cylindrique avec une surface extérieure en contact glissant avec une surface correspondante. Préférentiellement, c'est ce contact glissant qui va guider le deuxième obturateur. Ce dernier présente préférentiellement un jeu interne avec la tige de commande le traverse.

Selon un encore autre mode avantageux de l'invention, la surface correspondante est formée par un élément intermédiaire disposé dans un alésage formé dans le corps et préférentiellement maintenu dans ledit alésage par un assemblage vissé selon l'axe longitudinal dudit robinet, ledit assemblage comprenant un organe de commande manuel et configuré pour convertir la rotation dudit organe de commande manuel en mouvement de translation de la tige de commande. La présence de l'élément intermédiaire rend l'usinage, la construction et le montage du robinet plus simple.

Selon un encore autre mode avantageux de l'invention, la surface correspondante comprend des moyens d'arrêt servant de butée au deuxième obturateur, lesdits moyens étant préférentiellement formés par une gorge recevant un circlip. En combinaison avec la présence de l'élément intermédiaire, le clapet de pression résiduelle peut alors être assemblé avant d'être introduit dans le corps du robinet.

Selon un encore autre mode avantageux de l'invention, le deuxième obturateur comprend une cavité traversée par la tige de commande et les moyens élastiques du deuxième obturateur comprennent un ressort disposé à l'intérieur de ladite cavité. Cette construction rend le robinet compact.

Selon un encore autre mode avantageux de l'invention, les premier et deuxième sièges sont formés, préférentiellement intégralement, sur un élément généralement cylindrique mobile en translation dans un alésage du corps et traversé par la tige de commande.

Selon un encore autre mode avantageux de l'invention, le robinet comprend une vis de commande principale conçue pour convertir un mouvement de commande manuel en un mouvement de translation de la tige de commande, et une vis de commande auxiliaire vissée sur ladite vis de commande principale et destinée à venir en contact avec ladite tige de commande.

Selon un encore autre mode avantageux de l'invention, la vis de commande auxiliaire comprend une tige de commande débouchant de la vis de commande principale vers l'extérieur du robinet, et avec un moyen d'arrimage permettant de limiter l'enfoncement de ladite tige dans la vis de commande principale. Le moyen d'arrimage peut être par exemple un orifice affleurant avec le bord supérieur de la vis de commande principale.

La vis de commande auxiliaire est préférentiellement accessible depuis l'extérieur du robinet et présente une forme permettant une liaison en rotation avec un outil externe. Une telle forme peut être par exemple un six pans creux.

### Brève description des dessins

La figure 1 est une vue en plan d'un robinet pour gaz sous pression conforme à l'invention.
La figure 2 est une vue en coupe selon l'axe A-A de la figure 1, montrant l'intérieur du robinet dans un état fermé.
La figure 3 est une vue en coupe selon l'axe A-A de la figure 1, montrant l'intérieur du robinet dans un état ouvert en service.
La figure 4 est une vue en coupe selon l'axe A-A de la figure 1, montrant l'intérieur du robinet dans un état ouvert pour le remplissage.

### Description des modes de réalisation

Le robinet illustré dans les figures va être décrit en correspondance avec son orientation sur les figures, notamment au moyen de termes destinés à décrire la position relative des différents composants du robinet, tels que "inférieur(e)(s)", "bas(se)(s)", "supérieur(e)(s)" et "haut(e)(s)". Ces termes sont à interpréter de manière relative dans la mesure où le robinet peut être utilisé selon différentes orientations.

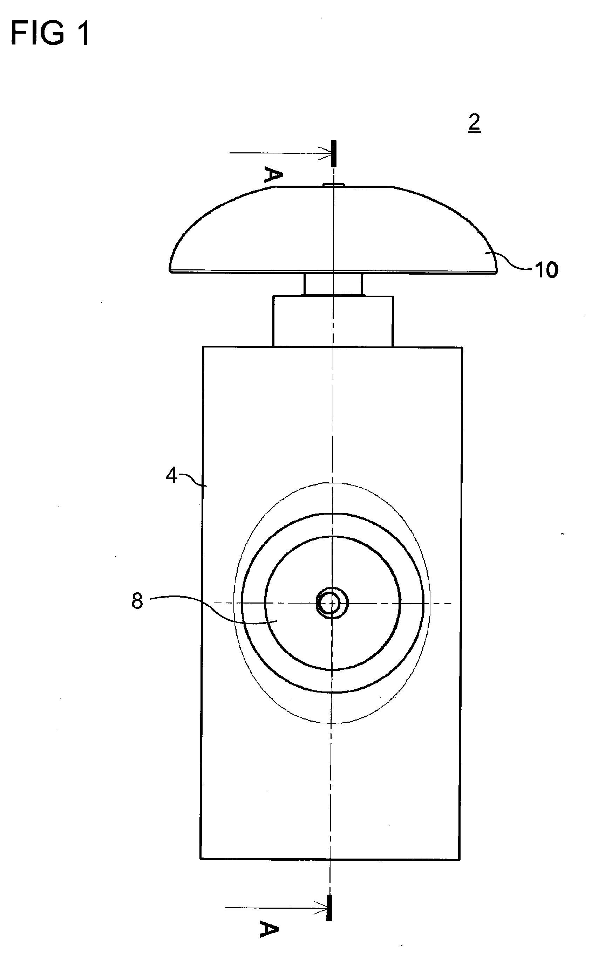

La figure 1 est une vue en plan d'un robinet 2 conforme à l'invention. Il comporte un corps 4 avec une entrée de gaz (non visible sur la figure 1), une sortie de gaz 8 et un volant de commande manuelle 10 du robinet.

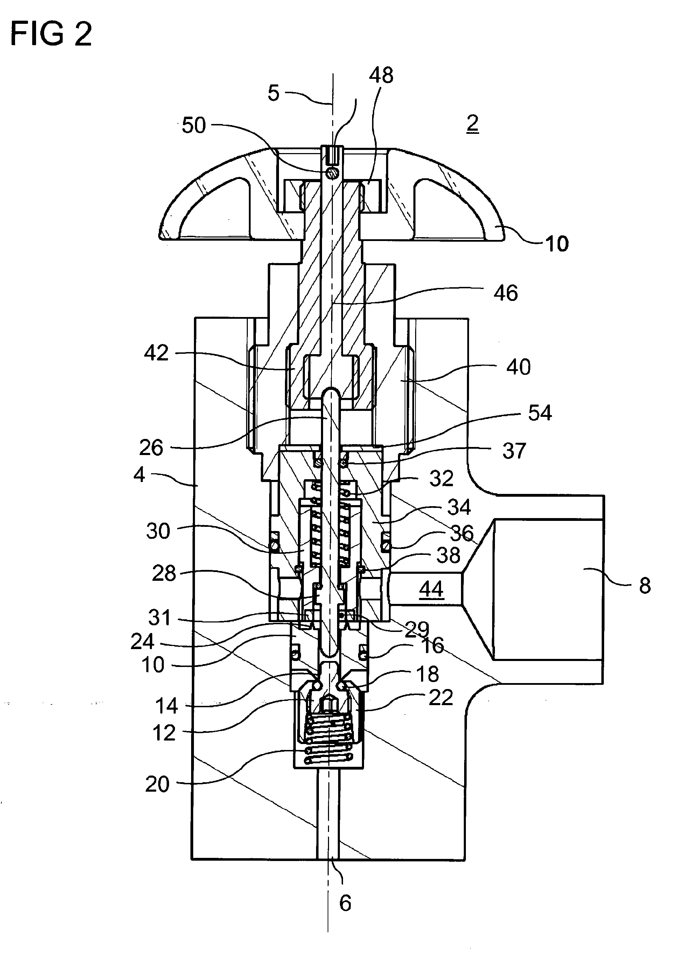

La figure 2 est une vue en coupe du robinet de la figure 1 selon l'axe A-A, montrant l'intérieur du robinet dans un état fermé. Le robinet 2 comprend un corps 4 sur lequel sont montés une série de composants qui vont être décrits en détails.

Le corps comprend une entrée de gaz 6, une sortie de gaz 8 et un passage 44 assurant une liaison entre l'entrée et la sortie de gaz. L'entrée de gaz est illustrée de manière très schématique et peut prendre différente formes. En effet, la partie basse du robinet peut présenter un filetage conique destiné à être vissé sur une bouteille. L'entrée de gaz peut comporter un filtre ou tout autre composant bien connu de l'homme de métier.

Le corps 4 comprend également un axe longitudinal 5 ainsi qu'un série d'alésages superposés et concentriques avec l'axe longitudinal. Ces alésages sont en liaison avec le passage reliant l'entrée 6 et la sortie 8 de gaz, et sont destinés à recevoir les différents composants du robinet.

Le robinet 4 comprend une vanne de fermeture du passage entre l'entrée et la sortie, ladite vanne comprenant un premier siège 14 et un premier obturateur mobile 12 coopérant de manière étanche avec ledit siège. Le siège 12 est formé intégralement avec un élément cylindrique 10 mobile en translation et de manière étanche dans un alésage du corps. L'élément 10 comporte un orifice central aligné avec l'axe longitudinal 5 du robinet et des alésages. Le siège 14 présente une forme de lèvre circulaire contournant l'orifice et centrée sur ce dernier. L'obturateur 12 comporte une base et un pointeau apte à coulisser dans l'orifice de l'élément 10. Il comporte également un joint torique 18 disposé autour de la partie pointeau et sur la base. Ce joint est maintenu en place par une jupe 22 vissée sur la surface extérieure cylindrique de la base de l'obturateur. La jupe 22 sert également de guidage de l'obturateur 12 dans l'alésage correspondant du corps 4. Un ressort 20 est disposé entre l'obturateur 12 et le fond de l'alésage inférieur, exerçant un effort élastique sur l'obturateur de manière à le mettre en contact étanche avec le siège 14.

Une tige de commande 26 disposée selon l'axe longitudinal 5 est mobile en translation. Elle est commandée par un dispositif de commande manuel comprenant essentiellement un volant de commande 10, une vis de commande principale 42 et une vis de commande auxiliaire 46. La vis de commande principale est maintenue et guidée par un couvercle cylindrique 40. Elle présente un filetage extérieur qui coopère avec un filetage intérieur du couvercle cylindrique 40 de manière à ce qu'un mouvement de rotation de la vis de commande principale ait pour effet de déplacer ladite vis verticalement ou, autrement dit, selon l'axe longitudinal du robinet. La vis de commande auxiliaire 46 est vissée à l'intérieur de la vis de commande principale 42, la vis de commande auxiliaire 46 servant de butée venant en contact avec la tige de commande 26. Plus précisément, la vis de commande auxiliaire 46 comporte un évidement arrondi sur sa surface inférieure, cet évidement étant destiné à recevoir l'extrémité pareillement arrondie de la tige de commande 26. La vis de commande principale 42 comprend à son extrémité supérieure un épaulement et une forme extérieure non circulaire. Le volant de commande 10 comporte un orifice correspondant de manière à pouvoir être monté sur l'extrémité de la vis de commande principale, en appui contre l'épaulement et lié en rotation avec la vis de commande via la forme non circulaire. Un écrou 48 est engagé sur un filetage extérieur de l'extrémité de la vis de commande principale 42 de manière à assurer la retenue du volant 10. La vis de commande auxiliaire 46 comprend une tige de commande traversant la vis de commande principale 42 débouchant à son extrémité supérieure à hauteur de l'écrou 48. L'extrémité débouchante de la tige de commande de la vis de commande auxiliaire comprend un moyen d'engagement en rotation avec un outil externe, tel qu'un six pans creux 52 ainsi qu'un perçage 50 affleurant avec la face supérieure de la vis de commande principale 42. Ce perçage peut recevoir une goupille servant de moyen de blocage de descente de la vis de commande auxiliaire 46 rapport à la vis de commande principale 42.

L'actionnement du volant de commande dans une direction de rotation faisant descendre la vis de commande principale 42 va faire descendre la tige de commande 26, et partant, va ouvrir la vanne de fermeture.

Le robinet comprend également un clapet de pression résiduelle disposé en aval de la vanne de fermeture. Il comprend un deuxième siège 24 et un deuxième obturateur 30 de forme généralement cylindrique, traversé par la tige de commande 26. Ce deuxième obturateur est mobile en translation selon l'axe longitudinal 5 et comporte une zone déformable 31, préférentiellement rapportée, de forme circulaire centrée sur l'axe longitudinal et coopérant de manière étanche avec le siège 24. Le siège 24 est formé, préférentiellement intégralement, avec l'élément cylindrique 10 mobile en translation. Le siège 24 du clapet de pression résiduelle est par conséquent opposé au siège 14 de la vanne de fermeture. Le deuxième obturateur 30 présente une surface extérieure cylindrique reçue de manière coulissante dans un alésage d'un élément intermédiaire 34 logé dans un alésage du corps 4. L'obturateur est préférentiellement creux et renferme un ressort de compression 32 en appui entre l'élément intermédiaire 34 et l'obturateur 30. Il présente à cet effet une forme de jupe avec un épaulement intérieur sur lequel le ressort 32 vient prendre appui. Le deuxième obturateur 30 est par conséquent pressé par le ressort 32 contre le deuxième siège 24, et ce de manière étanche.

L'élément intermédiaire 34 comporte un alésage destiné à recevoir l'obturateur 30 du clapet de pression résiduelle. Cet alésage comporte une gorge logeant un circlips 38 servant d'arrêt ou butée pour l'obturateur 30. En effet, ce dernier est inséré dans l'alésage contre l'effort du ressort 32. Le circlips 38 est ensuite mis en place afin d'assurer une retenue de l'obturateur vers le bas, c'est-à-dire limitant sa course vers le bas. L'obturateur présente à cet effet un épaulement au niveau de sa surface extérieure, cet épaulement étant destiné à coopérer avec le circlips. L'élément intermédiaire 34 comporte une surface extérieure et des moyens d'étanchéité avec un alésage du corps de robinet. Ces moyens comprennent un joint torique logé dans une gorge formée dans cette surface extérieure.

L'élément intermédiaire 34 comprend également un alésage sur sa face supérieure, cet alésage logeant un joint torique 37 et une bague anti extrusion, le joint coopérant de manière étanche en glissement avec la surface extérieure de la tige de commande 26. Une rondelle 54 est disposée sur la face supérieure de l'élément intermédiaire, ce dernier et la rondelle étant maintenus en place par le couvercle cylindrique 40 vissé dans le corps du robinet.

Lorsque la vanne de fermeture formée par le premier obturateur et le premier siège 14 est ouverte par un mouvement de descente de la tige de commande, le gaz sous pression au niveau de l'entrée 6 peut alors s'écouler dans la cavité 29 à l'intérieur du deuxième obturateur. Cette cavité 29 est étanche par rapport à la basse pression de la sortie grâce au joint 39 disposé entre la tige de commande et l'épaulement intérieur servant d'appui au ressort 32. La haute pression de l'entrée va ainsi s'établir sur une surface circulaire dont le diamètre correspond à approximativement à celui de l'extrémité de la lèvre du siège 24. La pression éventuelle de sortie va quant à elle s'établir sur la face arrière ou supérieure de l'obturateur 30 du clapet, c'est-à-dire sur une surface annulaire dont le diamètre extérieur correspond à celui de la surface extérieure de l'obturateur et dont le diamètre intérieur correspond approximativement au diamètre intérieur de l'épaulement intérieur. Le gaz ne pourra s'écouler vers la sortie 8 que si la différence de pression entre l'entrée et la sortie dépasse un seuil prédéterminé. Ce seuil est par exemple compris entre 3 et 5 bars et les surfaces d'appui de l'obturateur 30 ainsi que le ressort 32 sont dimensionnés de manière à ce que le clapet s'ouvre à une pareille différence de pression.

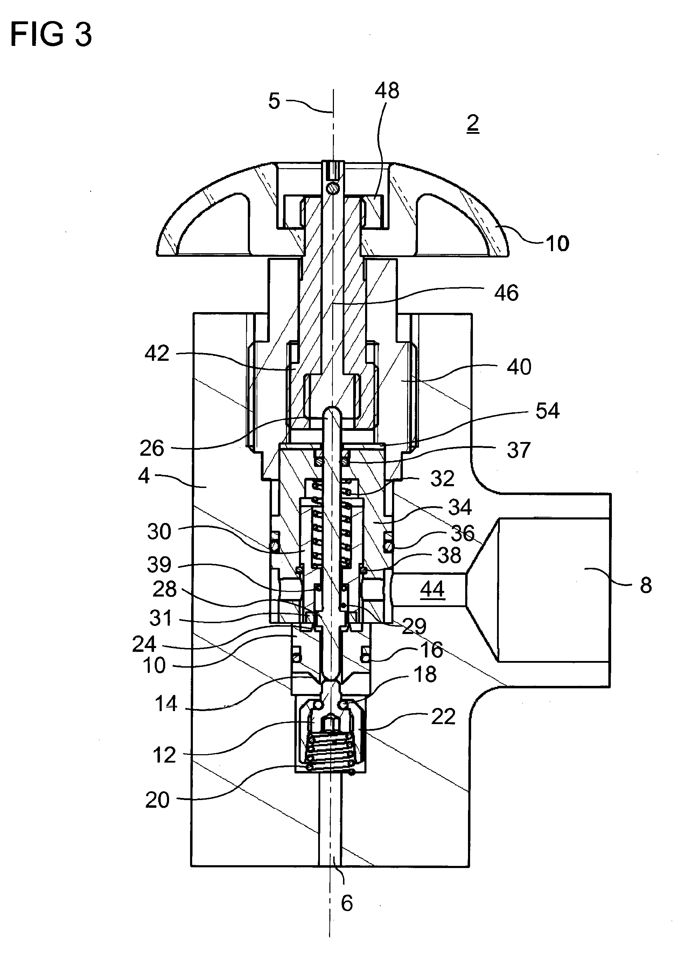

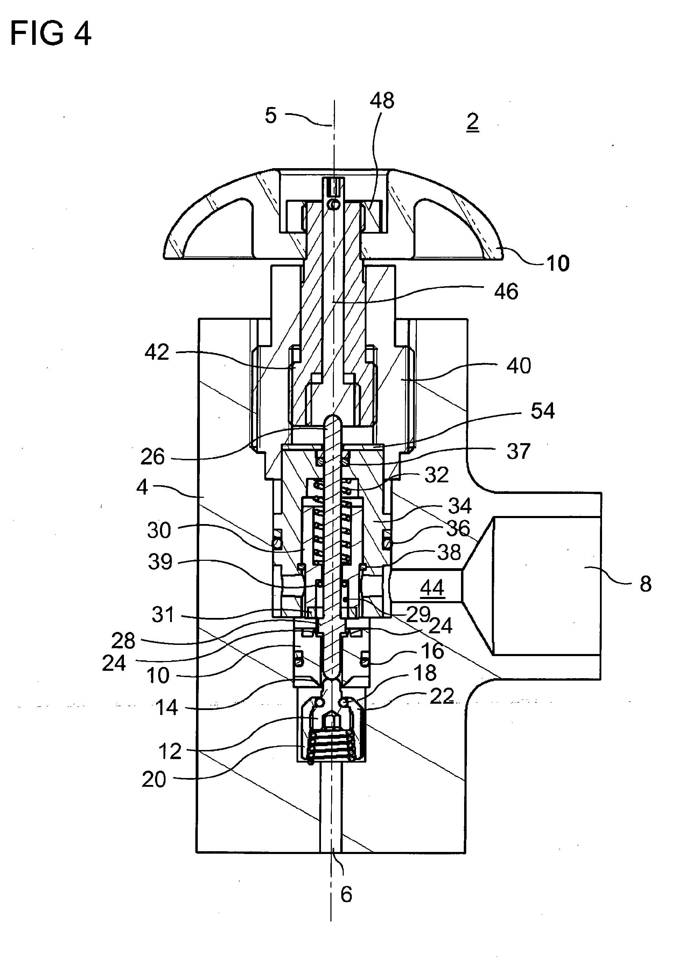

Le fonctionnement du robinet va maintenant être décrit en relation avec les figures 3 et 4, sachant que la figure 2 illustre le robinet en position fermée.

La figure 3 illustre le robinet en position ouverte prête au service. Le volant de commande 10 a été manipulé en rotation de manière à faire descendre la tige de commande 26 jusqu'à ce que la face inférieure du volant arrive en butée avec le couvercle cylindrique 40. La tige de commande 26 est en butée contre le pointeau du premier obturateur 12 de manière à maintenir ledit obturateur à distance du siège 14 contre l'effort du ressort 20. La pression du gaz à l'entrée 6 peut alors s'établir dans la chambre 29 de l'obturateur 30 du clapet de pression résiduelle. Le clapet va s'ouvrir et la pression va alors s'établir au niveau de la sortie 8 établissant ainsi un débit de service. En service, la différence de pression entre l'entrée et la sortie est généralement nettement au delà du seuil prédéterminé. Ce seuil qui est typiquement de l'ordre de quelques bars, permet d'éviter une contamination de la bouteille par mise à l'air libre une fois la bouteille vidée. Un niveau de pression de l'ordre du seuil prédéterminé sera par conséquent toujours présent dans la bouteille même lorsque le robinet est ouvert avec la sortie en contact avec l'air ambiant.

Il est à noter que l'élément cylindrique 10 comportant les premier et deuxième sièges 14 et 24 respectivement est soumis à la haute pression d'entrée sur sa face inférieure et à la plus basse pression de sortie sur sa face supérieure. Etant donné l'équivalence des surfaces de travail du gaz sur ces deux faces, l'élément cylindrique 10 sera maintenu en position haute en butée sur l'élément intermédiaire 34 durant toute la phase de service du robinet.

Il est également à noter que l'épaulement 28 de la tige de commande est à distance de l'élément cylindrique 10 et n'exerce aucune influence sur sa position.

La figure 4 illustre le robinet en position mettant le contenu de la bouteille en contact avec la sortie et permettant son remplissage par un débit de gaz inverse à celui du service. En comparaison avec l'état du robinet tel qu'illustré à la figure 3, c'est-à-dire où la vis de commande principale 42 est en position basse, la vis de commande auxiliaire 46 a été manipulée de manière à être descendue par rapport à la vis de commande principale 42. Cette manipulation supplémentaire a pour effet de faire descendre d'avantage la tige de commande 26. L'épaulement 28 de cette dernière est en contact avec l'élément cylindrique formant les deux sièges 14 et 24. Le siège 24 du clapet de pression résiduelle va ainsi s'éloigner de son obturateur 30. Etant donné que la course de ce dernier est limitée par le circlips, le siège 24 va quitter l'obturateur et ouvrir le clapet de pression résiduelle. Le déplacement du siège 14 de la vanne de fermeture n'aura pas pour effet de fermer cette dernière compte tenu du fait que l'obturateur 12 est pareillement déplacé vers le bas jusqu'à ce que sa jupe 20 vienne en contact avec le fond de son alésage dans le corps.

Dans l'état selon la figure 4, la bouteille (non représentée) connectée au robinet peut ainsi être remplie par un débit de gaz en sens inverse à celui du service.

La manipulation correspondant à la figure 4 n'est pas supposée être faite par l'utilisateur du robinet mais bien par du personnel assurant le service de remplissage. C'est la raison pour laquelle la manipulation de la vis de commande auxiliaire est différenciée de celle du robinet. Elle nécessite l'enlèvement d'une éventuelle goupille de sécurité et l'intervention d'un outil de commande.

Il est à noter que d'autres dispositions sont possibles pour assurer la commande la tige de commande selon une double course. En effet, il est envisageable de ne prévoir qu'une seule vis de commande et de prévoir une butée amovible limitant sa course.

## Revendications

1. Robinet (2) pour gaz sous pression, comprenant: un corps (4) avec une entrée de gaz (6), une sortie de gaz (8) et un passage (44) reliant ladite entrée (6) à ladite sortie (8); un premier obturateur (12) mobile en translation selon une direction correspondant essentiellement à un axe longitudinal (5) du robinet, ledit premier obturateur (12) étant apte à coopérer de manière étanche avec un premier siège (14) de manière à fermer ledit passage; un tige de commande (26) dudit premier obturateur (12) disposée selon une direction correspondant essentiellement audit axe longitudinal (5); un deuxième obturateur (30) mobile en translation selon une direction correspondant essentiellement audit axe longitudinal (5), coopérant de manière étanche avec un deuxième siège (24) sous l'effet de moyens élastiques (32) de manière à fermer ledit passage lorsque la différence de pression entre ladite entrée (6) et ladite sortie (8) est inférieure à un seuil prédéterminé,
**caractérisé en ce que** le premier siège (14) est mobile en translation avec le deuxième siège (24) selon une direction correspondant essentiellement audit axe longitudinal (5) et de manière étanche par rapport audit passage (44); e t ladite tige de commande (26) est conçue pour, dans un déplacement selon une direction, coopérer avec lesdits premier et deuxième sièges (14, 24) en vue de leur déplacement après avoir ouvert le passage entre le premier obturateur (12) et le premier siège (14), de manière à ouvrir le passage entre le deuxième obturateur (30) et le deuxième siège (24).

2. Robinet pour gaz sous pression selon la revendication précédente, **caractérisé en ce que** la tige de commande (26) comprend une première butée (28) destinée à coopérer avec les premier et deuxième sièges (14, 24), ladite butée étant préférentiellement sous forme de collerette (28).

3. Robinet pour gaz sous pression selon l'une des revendications précédentes, **caractérisé en ce que** le deuxième obturateur (30) et le deuxième siège (24) sont disposés entre le premier obturateur (12) et la sortie de gaz (8).

4. Robinet de gaz sous pression selon l'une des revendications précédentes, **caractérisé en ce que** le premier obturateur (12) est disposé en amont du premier siège (14).

5. Robinet de gaz sous pression selon l'une des revendications 2 à 4, **caractérisé en ce que** la tige de commande (26) comprend une deuxième butée destinée à coopérer avec le premier obturateur (12), ladite deuxième butée étant préférentiellement formée par l'extrémité de ladite tige.

6. Robinet de gaz sous pression selon l'une des revendications précédentes, **caractérisé en ce que** la tige de commande (26) se déplace essentiellement, préférentiellement exclusivement, en translation.

7. Robinet pour gaz sous pression selon l'une des revendications précédentes, **caractérisé en ce que** le deuxième obturateur (30) est conçu de sorte à ce que son étanchéité avec le deuxième siège (24) entoure la tige de commande (26).

8. Robinet pour gaz sous pression selon l'une des revendications précédentes, **caractérisé en ce que** le deuxième obturateur (30) comprend une jupe généralement cylindrique supportant sur sa tranche une surface d'étanchéité (31) préférentiellement déformable, destinée à coopérer avec le deuxième siège (24).

9. Robinet pour gaz sous pression selon l'une des revendications précédentes, **caractérisé en ce que** le deuxième obturateur (30) a une forme généralement cylindrique avec une surface extérieure en contact glissant avec une surface correspondante.

10. Robinet pour gaz sous pression selon la revendication précédente, **caractérisé en ce que** la surface correspondante est formée par un élément intermédiaire (34) disposé dans un alésage formé dans le corps (4) et préférentiellement maintenu dans ledit alésage par un assemblage (40, 10, 42, 46) vissé selon l'axe longitudinal dudit robinet, ledit assemblage comprenant un organe de commande manuel (10) et configuré pour convertir la rotation dudit organe de commande manuel (10) en mouvement de translation de la tige de commande (26).

11. Robinet de gaz sous pression selon l'une des revendications 9 et 10, **caractérisé en ce que** la surface correspondante comprend des moyens d'arrêt servant de butée au deuxième obturateur (30), lesdits moyens étant préférentiellement formés par une gorge recevant un circlip (38).

12. Robinet de gaz sous pression selon l'une des revendications 9 à 11, **caractérisé en ce que** le deuxième obturateur (30) comprend une cavité traversée par la tige de commande (26) et les moyens élastiques dudit deuxième obturateur comprennent un ressort (32) disposé à l'intérieur de ladite cavité.

13. Robinet pour gaz sous pression selon l'une des revendications précédentes, **caractérisé en ce que** les premier et deuxième sièges (14, 24) sont formés, préférentiellement intégralement, sur un élément généralement cylindrique (10) mobile en translation dans un alésage du corps et traversé par la tige de commande (26).

14. Robinet pour gaz sous pression selon l'une des revendications précédentes, **caractérisé en ce qu'**il comprend une vis de commande principale (42) conçue pour convertir un mouvement de commande manuel en un mouvement de translation de la tige de commande (26), et une vis de commande auxiliaire (46) vissée sur ladite vis de commande principale (42) et destinée à venir en contact avec ladite tige de commande (26).

15. Robinet pour gaz sous pression selon la revendication précédente, **caractérisé en ce que** la vis de commande auxiliaire (46) comprend une tige de commande débouchant de la vis de commande principale (42) vers l'extérieur du robinet, et avec un moyen d'arrimage (50) permettant de limiter l'enfoncement de ladite tige dans la vis de commande principale (42).

## Patentansprüche

1. Hahn (2) für Druckgas, mit: einem Gehäuse (4) mit einem Gaseinlass (6), einem Gasauslass (8) und einem Durchgang (44), der den genannten Einlass (6) mit dem genannten Auslass (8) verbindet; einem ersten Schließorgan (12), das verschiebbar in einer Richtung beweglich ist, die im Wesentlichen einer Längsachse (5) des Hahns entspricht, wobei das genannte erste Schließorgan (12) in der Lage ist, gasdicht mit einem ersten Sitz (14) zusammenzuwirken, um den genannten Durchgang zu verschließen; einem Betätigungsstab (26) für das genannte erste Schließorgan (12), der in einer Richtung angeordnet ist, die im Wesentlichen der genannten Längsachse (5) entspricht; einem zweiten Schließorgan (30), das verschiebbar in einer Richtung beweglich ist, die im Wesentlichen der genannten Längsachse (5) entspricht und das gasdicht mit einem zweiten Sitz (24) zusammenwirkt und dies unter dem Einfluss von elastischen Mitteln (32), um den genannten Durchgang zu verschließen, wenn der Druck zwischen dem genannten Einlass (6) und dem genannten Auslass (8) unter eine festgelegte Schwelle absinkt, **dadurch gekennzeichnet, dass** der erste Sitz (14) verschiebbar mit dem zweiten Sitz (24) in einer Richtung beweglich ist, die im Wesentlichen der genannten Längsachse (5) entspricht und dies gasdicht im Verhältnis zu dem genannten Durchgang (44); und der genannte Betätigungsstab (26) so konzipiert ist, dass er bei einer Bewegung in eine Richtung mit den genannten ersten und zweiten Sitzen (14, 24) zusammenwirkt, um diese zu verschieben, nachdem er den Durchgang zwischen dem ersten Schließorgan (12) und dem ersten Sitz (14) geöffnet hat, um den Durchgang zwischen dem zweiten Schließorgan (30) und dem zweiten Sitz (24) zu öffnen.

2. Hahn für Druckgas nach dem voranstehenden Anspruch, **dadurch gekennzeichnet, dass** der Betätigungsstab (26) einen ersten Anschlag (28) beinhaltet, der dazu bestimmt ist, um mit dem ersten und zweiten Sitz (14, 24) zusammenzuwirken, wobei der genannte Anschlag vorzugsweise die Form eines Sattels besitzt (28).

3. Hahn für Druckgas nach einem der voranstehenden Ansprüche, **dadurch gekennzeichnet, dass** das zweite Schließorgan (30) und der zweite Sitz (24) zwischen dem ersten Schließorgan (12) und dem Gasauslass (8) angeordnet ist.

4. Hahn für Druckgas nach einem der voranstehenden Ansprüche, **dadurch gekennzeichnet, dass** das erste Schließorgan (12) oberhalb des ersten Sitzes (14) angeordnet ist.

5. Hahn für Druckgas nach einem der Ansprüche 2 bis 4, **dadurch gekennzeichnet, dass** der Betätigungsstab (26) einen zweiten Anschlag beinhaltet, der dazu bestimmt ist, um mit dem ersten Schließorgan (12) zusammenzuwirken, wobei der genannte zweite Anschlag vorzugsweise durch das Ende des genannten Stabs gebildet wird.

6. Hahn für Druckgas nach einem der voranstehenden Ansprüche, **dadurch gekennzeichnet, dass** sich der Betätigungsstab (26) im Wesentlichen und vorzugsweise ausschließlich verschiebbar bewegt.

7. Hahn für Druckgas nach einem der voranstehenden Ansprüche, **dadurch gekennzeichnet, dass** das zweite Schließorgan (30) so ausgelegt ist, dass seine Abdichtung mit dem zweiten Sitz (24) den Betätigungsstab (26) umgibt.

8. Hahn für Druckgas nach einem der voranstehenden Ansprüche, **dadurch gekennzeichnet, dass** das zweite Schließorgan (30) eine im allgemeinen zylindrische Schürze beinhaltet, die auf ihrer Kante eine vorzugsweise verformbare Dichtungsfläche (31) besitzt, die dazu bestimmt ist, um mit dem zweiten Sitz (24) zusammenzuwirken.

9. Hahn für Druckgas nach einem der voranstehenden Ansprüche, **dadurch gekennzeichnet, dass** das zweite Schließorgan (30) eine im Allgemeinen zylindrische Form besitzt, mit einer Außenfläche, die in gleitendem Kontakt mit einer entsprechenden Oberfläche steht.

10. Hahn für Druckgas nach dem voranstehenden Anspruch, **dadurch gekennzeichnet, dass** die entsprechende Oberfläche aus einem Zwischenelement (34) besteht, das in einer Bohrung im Gehäuse (4) angeordnet ist und in der genannten Bohrung vorzugsweise anhand einer Baugruppe (40, 10, 42, 46) gehalten wird, die in der Längsachse des genannten Hahns verschraubt ist, wobei die genannte Baugruppe ein Handbetätigungsorgan (10) beinhaltet und so konfiguriert ist, dass die Rotation des genannten Handbetätigungsorgans (10) in eine Verschiebung des Betätigungsstabs (26) umgewandelt wird.

11. Hahn für Druckgas nach einem der Ansprüche 9 und 10, **dadurch gekennzeichnet, dass** die entsprechende Oberfläche Stoppvorrichtungen beinhaltet, die als Anschlag für das zweite Schließorgan (30) dienen, wobei die genannten Vorrichtungen vorzugsweise aus einer Rille bestehen, die einen Sicherungsring (38) aufnimmt.

12. Hahn für Druckgas nach einem der Ansprüche 9 bis 11, **dadurch gekennzeichnet, dass** das zweite Schließorgan (30) eine Vertiefung beinhaltet, die von dem Betätigungsstab (26) und den elastischen Mitteln des genannten zweiten Schließorgans durchquert wird, die eine Feder (32) beinhalten, die im Inneren der genannten Vertiefung angeordnet ist.

13. Hahn für Druckgas nach einem der voranstehenden Ansprüche, **dadurch gekennzeichnet, dass** die ersten und zweiten Sitze (14, 24) vorzugsweise vollständig auf einem allgemein zylindrischen Element (10) ausgeformt sind, das verschiebbar in einer Bohrung des Gehäuses beweglich ist und von dem Betätigungselement (26) durchquert wird.

14. Hahn für Druckgas nach einem der voranstehenden Ansprüche, **dadurch gekennzeichnet, dass** er eine Hauptbetätigungsschraube (42) beinhaltet, die so ausgelegt ist, dass sie eine manuelle Betätigung in eine Verschiebung des Betätigungsstabs (26) umwandelt, und eine Hilfsbetätigungsschraube (46), die auf die genannte Hauptbetätigungsschraube (42) aufgeschraubt ist und dafür bestimmt ist, um mit dem genannten Betätigungsstab (26) in Kontakt zu treten.

15. Hahn für Druckgas nach dem voranstehenden Anspruch, **dadurch gekennzeichnet, dass** die Hilfsbetätigungsschraube (46) einen Betätigungsstab beinhaltet, der der über die Hauptbetätigungsschraube (42) hinaus zur Außenseite des Hahns hervorsteht, und eine Sperrvorrichtung (50), die eine Begrenzung des Eindringens des genannten Stabs in die Hauptbetätigungsschraube (42) ermöglicht.

## Claims

1. Pressurised gas valve (2) comprising: a body(4) with a gas entry (6) and a gas exit (8) and a passage (44) connecting the said entry (6) to the said exit (8); a first closure member (12) movable in translation in a direction essentially along the longitudinal axis (5) of the valve, the said closure member designed to seal with a first seat (14) so as to close the said passage; a control rod (26) for the said first closure member, located in a direction essentially along the said longitudinal axis (5); a second closure member (30) movable in translation in a direction essentially along the said longitudinal axis (5), the said closure member designed to seal with a second seat (24) through elastic means (32) so as to close the said passage when the pressure difference between the said entry (6) and the said exit (8) is less than a predetermined threshold, **characterised in that** the first seat (14) is movable in translation with the second seat (24) in a direction corresponding to the said longitudinal axis (5) and sealed against the said passage (44); and the said control rod is designed so that, moving in one direction, it cooperates with the said first and second seats (14, 24) in order to move them after having opened the passage between the first closure member (12) and the first seat (14), so as to open the passage between the second closure member (30) and the second seat (24).

2. Pressurised gas valve in accordance with the previous claim, wherein the control rod (26) comprises an abutment (28) designed to cooperate with the first and second seats (12, 14), the said abutment being preferably in the form of a collar.

3. Pressurised gas valve in accordance with one of the previous claims, wherein the second closure member (30) and the second seat (24) are located between the first closure member and the gas exit (8).

4. Pressurised gas valve in accordance with one of the previous claims, wherein the first closure member (12) is located upstream of the first seat (14).

5. Pressurised gas valve in accordance with one of Claims 2 to 4, wherein the control rod (26) comprises a second abutment designed to cooperate with the first closure member (12), the said abutment being preferably formed at the end of the said rod.

6. Pressurised gas valve in accordance with one of the preceding claims, wherein the control rod (26) moves substantially, preferably exclusively, in translation.

7. Pressurised gas valve in accordance with one of the preceding claims, wherein the second closure member (30) is designed so that its seal with the second seat (24) surrounds the control rod (26).

8. Pressurised gas valve in accordance with one of the preceding claims, wherein the second closure member (30) comprises a generally cylindrical skirt carrying on its edge a preferably deformable sealing surface (31) designed to cooperate with the second seat (24).

9. Pressurised gas valve in accordance with one of the preceding claims, wherein the second closure member (30) has a generally cylindrical shape with an outer surface in sliding contact with a corresponding surface.

10. Pressurised gas valve in accordance with one of the preceding claims, wherein the corresponding surface is formed by an intermediate member (34) located in a bore formed in the body (4) and preferably held in the said bore by an assembly (40, 10, 42, 46) screwed along the longitudinal axis of the said valve, the said assembly comprising a manual control member (10) and configured to convert the rotation of the said manual control member (10) into a translational movement of the control rod (26).

11. Pressurised gas valve in accordance with one of Claims 9 and 10, wherein the corresponding surface comprises a stopping means abutting the second closure member (30), the said means preferably being formed of a groove holding a circlip (38).

12. Pressurised gas valve in accordance with one of Claims 9 and 11, wherein the second closure member (30) comprises a recess through which the control rod (26) and the said second elastic means of the second closure member comprises a spring (32) located within the said recess.

13. Pressurised gas valve in accordance with one of the preceding claims, wherein the first and second seats (14, 24) are formed, preferably integrally, on a generally cylindrical member (10) movable in translation in a bore of the body and penetrated by the control rod (26).

14. Pressurised gas valve in accordance with one of the preceding claims, wherein it comprises a main control screw (42) designed to convert a manual control movement into a translational movement of the control rod (26), and an auxiliary control screw (46) screwed onto the said main control screw (42) and designed to come into contact with the said control rod (26).

15. Pressurised gas valve in accordance with one of the preceding claims, wherein the auxiliary control screw (46) comprises a control rod emerging from the main control screw (42) towards the exterior of the valve and with a means of securing (50) so as to limit the insertion of the said rod in the main control screw (42).
